Europäisches Patentamt

European Patent Office

Office européen des brevets

(11) Publication number: 0 408 074 B1

# EUROPEAN PATENT SPECIFICATION

(45) Date of publication of patent specification: 14.12.94    (51) Int. Cl.⁵: **B62M 7/00**, B62M 23/00, B60K 1/00

(21) Application number: 90113482.5

(22) Date of filing: 13.07.90

(54) Electric motor driving vehicle and power unit thereof.

(30) Priority: 13.07.89 JP 181496/89

(43) Date of publication of application:
16.01.91 Bulletin 91/03

(45) Publication of the grant of the patent:
14.12.94 Bulletin 94/50

(84) Designated Contracting States:
BE CH DE FR GB IT LI LU NL

(56) References cited:
EP-A- 0 024 373
DE-A- 2 218 730
DE-A- 2 245 767
GB-A- 1 504 121

(73) Proprietor: HONDA GIKEN KOGYO KABUSHIKI
KAISHA
1-1, Minami-Aoyama 2-chome
Minato-ku Tokyo 107 (JP)

(72) Inventor: Yamagiwa, Toshio 3-2-15-203, Niiza,
Niiza-shi
Saitama-Ken (JP)
Inventor: Ohzeki, Takashi
4160-28, Kawataya,
Okegawa-Shi
Saitama-Ken (JP)
Inventor: Suzuki, Hideaki
7-25-1, Shibayama,
Funabashi-Shi
Chiba-Ken (JP)
Inventor: Uruno, Hiroshi 3-19-501, Fujimi
Tsurugashima-Machi,
Iruma-Gun
Saitama-Ken (JP)
Inventor: Yoshinori, Kawashima
6-14, Suehiro-Cho, Sakado-Shi
Saitama-Ken (JP)
Inventor: Motodate, Shoji 1171-109,
Yamamuro 1-Chome
Fujimi-Shi
Saitama-Ken (JP)

(74) Representative: Fincke, Karl Theodor,
Dipl.-Phys. Dr. et al
Patentanwälte
H. Weickmann, Dr. K. Fincke
F.A. Weickmann, B. Huber
Dr. H. Liska, Dr. J. Prechtel, Dr. B. Böhm
Postfach 86 08
20
D-81635 München (DE)

## Description

The invention relates to a vehicle which runs by transmitting the rotation of an electric battery-driven motor to a driving wheel through a stepless speed change transmission and an automatic starting clutch.

A vehicle of this type is known from DE-A-2218730. In this vehicle the speed change transmission does not influence the motor efficiency.

EP-A-0024373 discloses a vehicle driven by an internal combustion engine, in which a driving wheel is rotatably supported by a transmission case pivotally connected to the vehicle body to be able to oscillate;a belt-type stepless speed change transmission provided within the transmission case connects the driving wheel to the motor; said motor is enclosed by a motor housing provided at a side portion of said transmission case.

In Japanese Utility Model Publication, Official Gazette No. SHO-48-14271 is disclosed a bicycle in which a chain is wound between a driving sprocket for driving by pedal and also by a DC motor. This DC motor is connected to a battery through a governor. In order to run with this electric motor speed is raised by stepping the pedals, and when it reaches a predetermined running speed, the governor switch becomes turned ON and the DC motor is started so that the motor driving can be started.

Generally, a motor owns the pecularity that torque and current are large in case of low rotational state and efficiency becomes decreased. Here the efficiency is given by the following expression:

$$n = 1.027 \cdot N \cdot T/(I \cdot V)$$

(N = number of rotations, T = torque, I = current, V = voltage).

When a load is applied to the motor in such low rotational condition, bad effects arise, namely that the amount of electric power consumption becomes larger and the cruising distance is shortened and also the heat generation quantity becomes larger whereby a deterioration of capacity comes about soon, etc. And, the extent of good efficiency of the motor is primarily limited within a relatively narrow range.

Therefore, although it is thought that the motor may not be started until it reaches a predetermined running speed as afore-mentioned example, man power driving should be applied together in this case. Accordingly, such article is expected that can be driven by a motor from the start.

Further, it is expected to adopt an integral structure of transmission mechanism with the motor to cool this efficiently because the heat generation quantity of the motor is great, and to make easy the wiring of the electric power supply cord of the motor, etc.

Therefore, it is a first object of the present invention to provide an electric motor driving vehicle capable of driving by the motor from the start and also capable of reducing a load at low running speed with respect to the motor.

A second object of the present invention is to provide a power unit employing the above-described driving structure.

A third object of the present invention is to provide an effective cooling structure on the basis of a motor in said power unit.

A fourth object of the present invention is to provide an advantageous wiring structure of the electric power supply cord of the motor.

In order to accomplish the above-described first object, the vehicle as described in the beginning is characterized in that said stepless speed change transmission is operated in a revolution range of said motor which is higher than a revolution number corresponding to the maximum power of said motor to maintain the speed of the motor within a range preselected to be within a predetermined percentage of maximum motor efficiency.

Further, the approaching of maximum efficiency is a matter which is established voluntarily according to the applying with excluding the low efficient range which may become disadvantageous by producing either a maximum torque or a large current in case the motor is loaded.

When the rotation of the motor is raised up and it reaches a predetermined rotational number approaching maximum efficiency of the motor, the transmission mechanism is connected to a driving shaft side, and the rotation of the motor side is transmitted to the driving wheel side through the transmission mechanism only within this range. Therefore, the motor load at low efficient condition is avoided, and since it becomes possible to run by utilizing only within the range of good efficiency of the motor which was relatively limited originally, the consuming electric power is reduced. Consequently, the discharging efficiency of the battery becomes high whereby the battery may keep long life and the cruising distance can be extended. And, since the heat generation quantity is also decreased, the deterioration of capacity can be prevented and durability is increased and at the same time, since it may be satisfied with components for small electric power, the motor can be made compact and light.

Further, the transmitting mechanism can be made to an automatic centrifugal force clutch or automatic speed change transmission. In the latter case, since the speed change can be carried out in a state that the range of the predetermined rotational number approaching maximum efficiency of the motor by the automatic speed change transmission in response to the establishment of speed change condition, the motor is always kept to adjacency of maximum efficiency during the speed changing. And, when the range between two ratios of maximum and minimum of automatic speed change transmission is established so as to change the speed with keeping a proper motor rotational number as it is which the motor becomes to a maximum efficiency in the time of 100% of duty factor, the motor can be operated always in a maximum efficient state within usual speed change range, and thereby above-described advantage becomes most remarkable state. Further, when the duty factor of usual speed change range is established to a predetermined value of less than 100% an output in excess (of more) of the output which is required for at least an increment of running resistance being obtained in maximum ratio so that such increment of running resistance can be overcome by said excessive output even if the usual speed change range becomes a maximum ratio, and thereby the running in maximum ratio can be made more powerful.

For the second object of the present invention, driving wheel is rotatably mounted to a transmission case movably supported to a vehicle body, and simultaneously, belt type stepless speed change transmission which is an automatic speed change transmission provided within the transmission case connected with this driving wheel and a motor contained within a motor housing provided to a side of transmission case are connected, so that it can be constructed as a power unit for rotationally driving said driving wheel. When it is made integrally as these, the driving mechanism can be made compactly.

Further, the entire power unit is preferably contained within the recess formed at the external surface of the driving wheel, so that it can be made further lighter and slimmer, and at the same time, the external appearance can be made neat and smart. And, the motor housing and the transmission case can also be made integrally, in this case, since the number of parts can be decreased and simultaneously the stress can be dispersed to both sides, the strength is improved and simultaneously the heat dispersion becomes good whereby the cooling efficiency of the motor housing side increase s.Further, when electric power supply cord of motor is fixed to a cover side mounted from sideward of the motor housing, the assembling of the motor is easy.

For the third object of the present invention, a communication port for communicating the interior of transmission case and the interior of motor housing of said power unit is provided, and at the same time, the motor and the belt type stepless speed change transmission can be cooled by a common cooling fan. Thus, entire apparatus can be made compact by making the cooling fan to be common.

Further, the cooling fan can also be mounted either to the driving pulley of the belt type stepless speed change transmission or to the rotary shaft of the motor adjoining to the communicating port within the motor housing. Even if it is made as these, entire apparatus can be made compactly and at the same time, in case of latter, the heat within the motor housing can be discharged efficiently to the belt type stepless speed change transmission side.

Furthermore, it can also be made such that a duct of which one end being communicated with the interior of the motor housing is provided at opposite of the transmission and another end of this duct is made to be opened to the interior space of vehicle, so that cooling air for the forced air cooling may be fed from this duct to the interior of the motor housing. If it is made as these, the cooling can be executed by introducing a clean air containing less dust and moisture.

For the fourth object of the present invention, the electric power supply wire cord of the motor is either arranged in the interior of said duct, or being directly drawn out of the motor housing to its exterior without passing through the transmission case. If it is made as these, interference with the belt type stepless speed change transmission side can be avoided, and the wiring becomes easy and at the same time, according to the former, it can be fixed without using any special component, besides, it is not smeared directly by mud or moisture.

BRIEF DESCRIPTION OF THE DRAWINGS

Figs. 1 to 14 show a first embodiment of the present invention, in which

Fig. 1 is a schematic side view of an electric motor driving automatic bicycle,

Fig. 2 is a cross sectional view taken along I-I line of Fig. 1,

Fig. 3 is a fragmentary diagram of an essential part taken from arrow III of Fig. 2 which is partly cut out,

Fig. 4 is a cross sectional view taken along IV-IV line of Fig. 1,

Fig. 5 and 6 are respectively magnified fragmentary views of an essential part of first and second clutches,

Fig. 7 is a circuit diagram showing a control system of the motor,

Fig. 8 is a longitudinal cross sectional view of accel-grip,

Fig. 9 is a cross sectional view taken along IX-IX line of Fig. 8,

Fig. 10 is a cross sectional view taken along X-X line of Fig. 8,

Fig. 11 is a graph for illustrating a setting method of speed change condition,

Fig. 12 is a graph for motor characteristic by duty factor,

Fig. 13 is a magnified fragmentary sectional view taken along XIII-XIII line of Fig. 1,

Fig. 14 is a graph for characteristic curve of electric motor driving automatic bicycle according to this embodiment,

Fig. 15 is a fragmentary diagram of essential part according to the second embodiment which is partly cut out,

Fig. 16 is a fragmentary diagram corresponding to Fig. 2 according to the third embodiment,

Fig. 17 is a graph for the motor characteristic thereof,

Fig. 18 to 22 are diagrams according to the fourth embodiment, in which

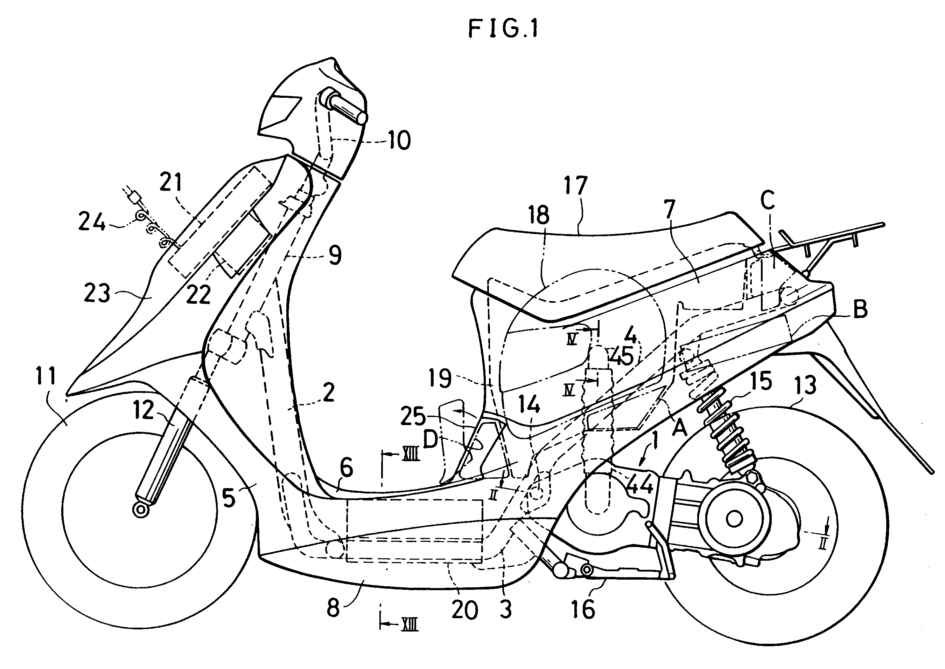

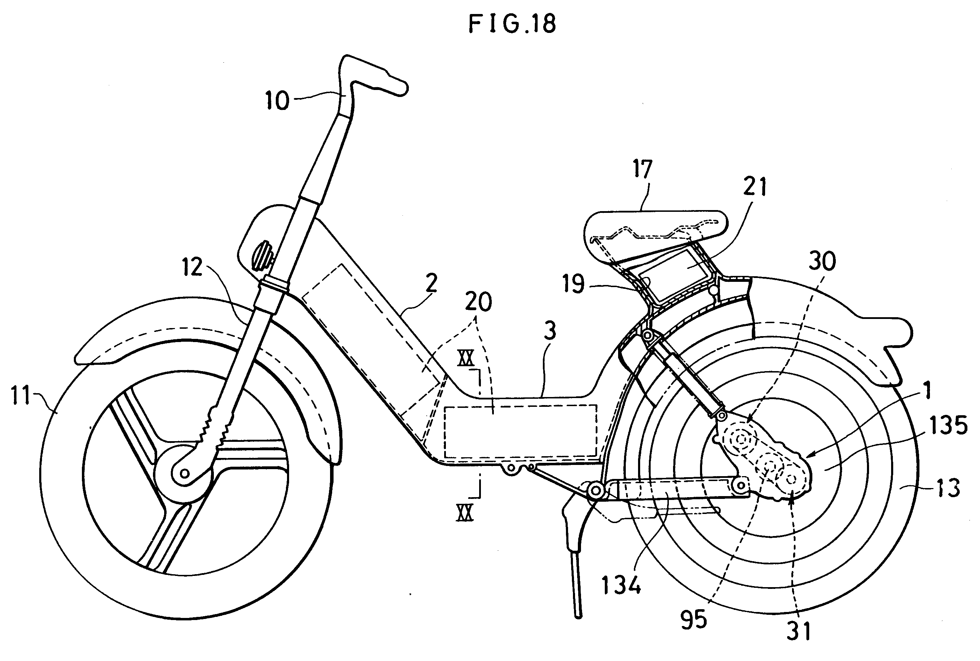

Fig. 18 is a diagram corresponding to Fig. 1,

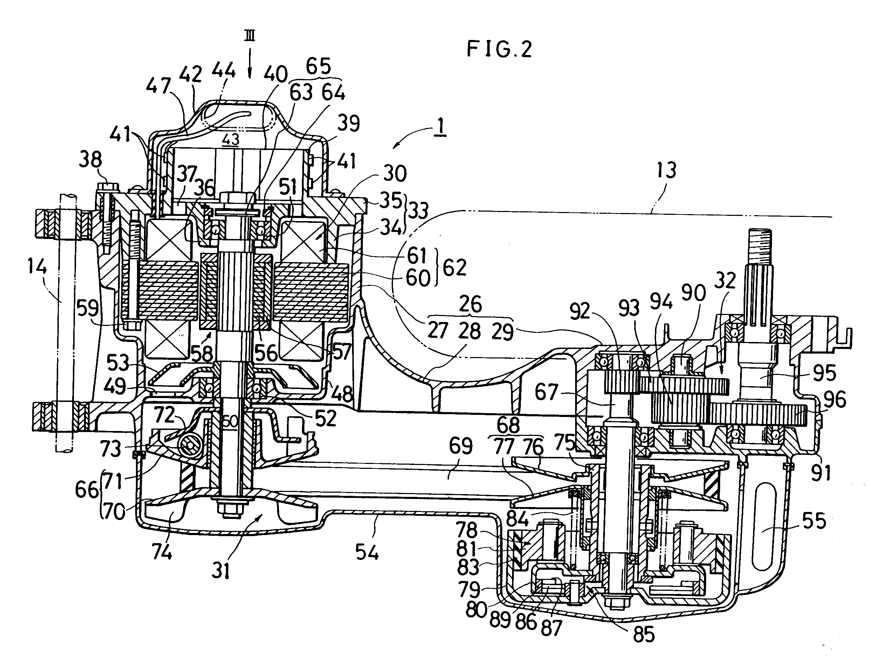

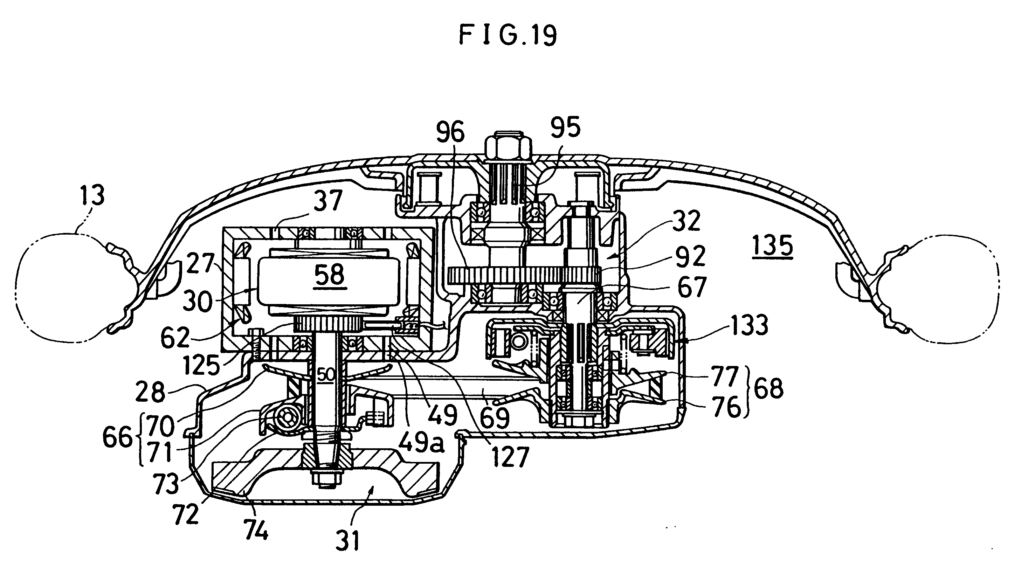

Fig. 19 is a diagram corresponding to Fig. 2,

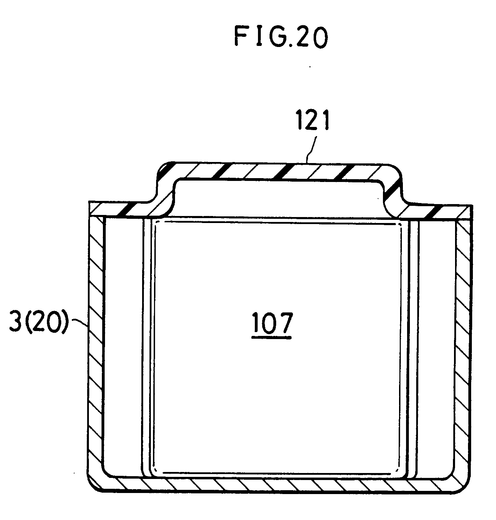

Fig. 20 is a magnified fragmentary cross sectional view taken along XX-XX line of Fig. 18,

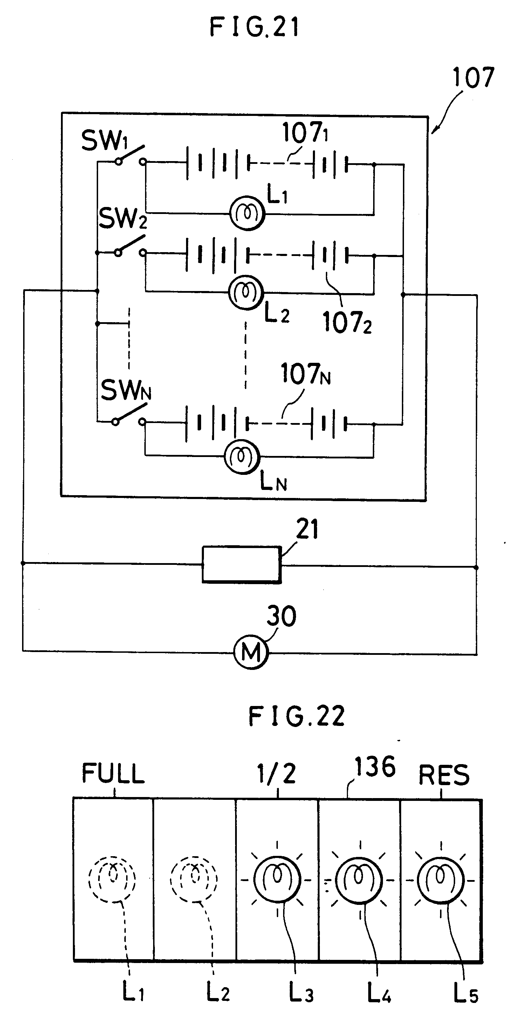

Fig. 21 is a wiring diagram of battery,

Fig. 22 is a diagram for illustrating indicators for indicating remaining quantity,

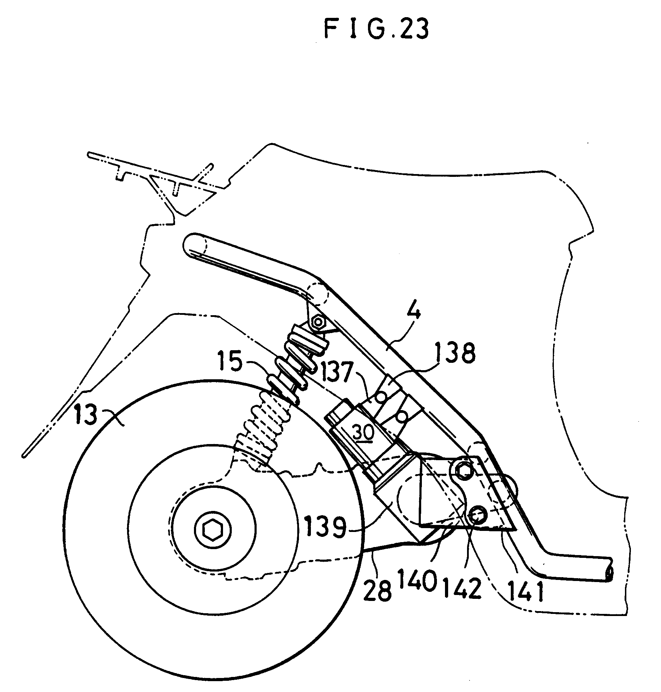

Fig. 23 is a fragmentary side view of rear part of vehicle body according to the fifth embodiment, and

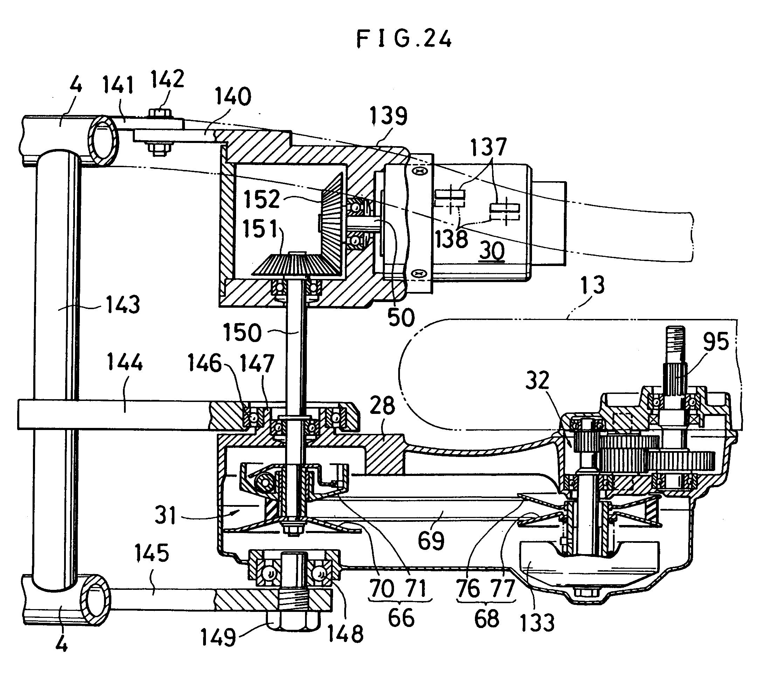

Fig. 24 is a fragmentary cross sectional view of its essential part of Fig. 23.

## DETAILED DESCRIPTION OF THE PREFERRED EMBODIMENTS

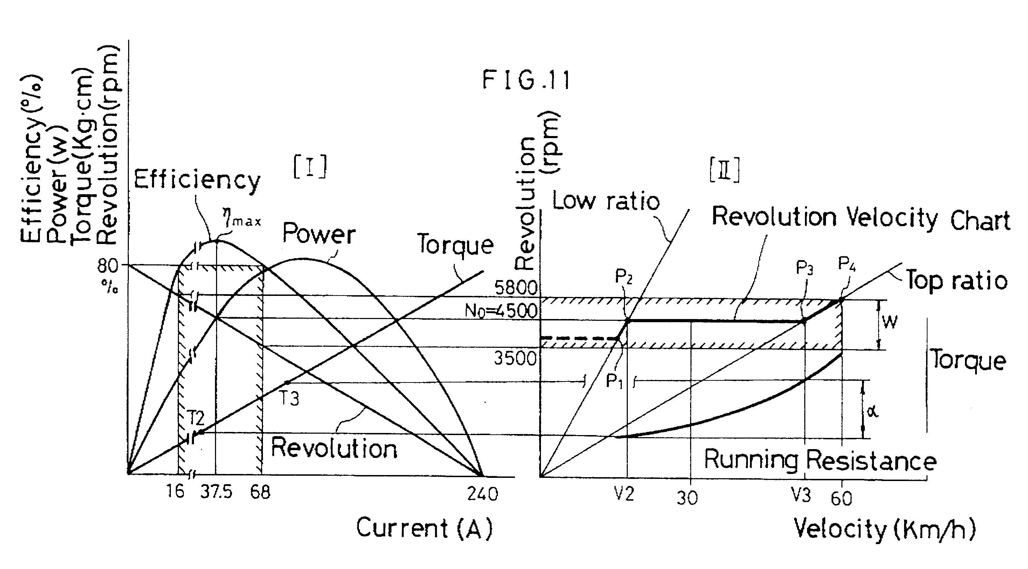

Hereinafter, the first embodiment of the present invention will be described in detail with reference to the Figs. 1 to 14.

Fig. 1 is a side view of entire body of an electric motor driving automatic bicycle mounted with a power unit according to the present invention, and its vehicle body frame is structured with front frame 2, central frame 3 and rear frame 4. Exterior side of the vehicle body frame is covered by a vehicle body frame made of synthetic resin assembled with leg shield 5, step floor 6, rear cover 7 and under cover 8.

Direction steering handle 10 is provided at the top of head pipe 9 fixed to the front frame 2, and simultaneously a front fork 12 for supporting a front wheel 11 is connected to the bottom end.

Front end of swing type power unit 1 for supporting the rear wheel 13 at the rear end is mounted to the rear portion of the central frame 3 by a pivot 14 whereby being supported to be able to oscillate freely to up and downward, and top surface of rear portion of the power unit 1 and the rear frame 4 are connected through a rear cushion 15. A stand 16 provided to the central frame 3 covers the bottom surface of front portion of the power unit 1 at a storing position of not shown, and serving concurrently as protection member for the motor to be described hereinafter stored within the interior. A container 19 for receiving a helmet etc. is provided to the inner side of the rear cover 7 at between the power unit 1 and the seat 17. This container 18 is formed of a material for shielding a magnetism so as any content such as floppy disk is not affected by the magnetism generated by the driving motor.

A battery box 20 for storing a battery as an electric power supply for the motor driving to be described hereinafter is provided at the inner side of the under cover 8 in the central frame 3.

And, a controller 21 for controlling the motor for driving and a charger 22 for charging the battery are provided to the inner side of the front cover 23 at the frontward of the head pipe 9, and electric wire cord 24 for charging to be connected to these is made to be able to connect to a commercially available electric power supply of exterior by opening a lid of not shown of the front cover 23.

Further, the controller 21 and the charger 22 are possible to be accommodated to the various places with an integral body or separate body, for instance, the controller 21 can be provided to a place of A or B shown by imaginary line at the rear portion of vehicle body, and the charger 22 can also be provided to a place of C of vehicle body rear portion or D position of central portion of vehicle body. In case of D position, a lid 25 capable of opening and closing freely is provided to a portion of the stepping floor 6, and said charging cord 24 is made to be able to make out and in from here.

And next, the structure of power unit will be described with reference to the Fig. 2. The power unit 1 is provided with an unit case 26 for supporting the pivot 14 at the front end. The unit case 26 is an article that the motor housing 27 of front portion, the transmission case 28 of central portion and the gear box 29 of rear portion are integrally formed; and the motor 30 is contained within the motor housing 27, the belt type stepless speed change transmission 31 within the transmission case 28, and final reducing gear 32 within the gear box 29; and the motor 30 and the final reducing gear 32 are connected through the belt type stepless speed change transmission 31. The belt type stepless speed change transmission 31 is an example of transmission mechanism and automatic speed change apparatus in this application.

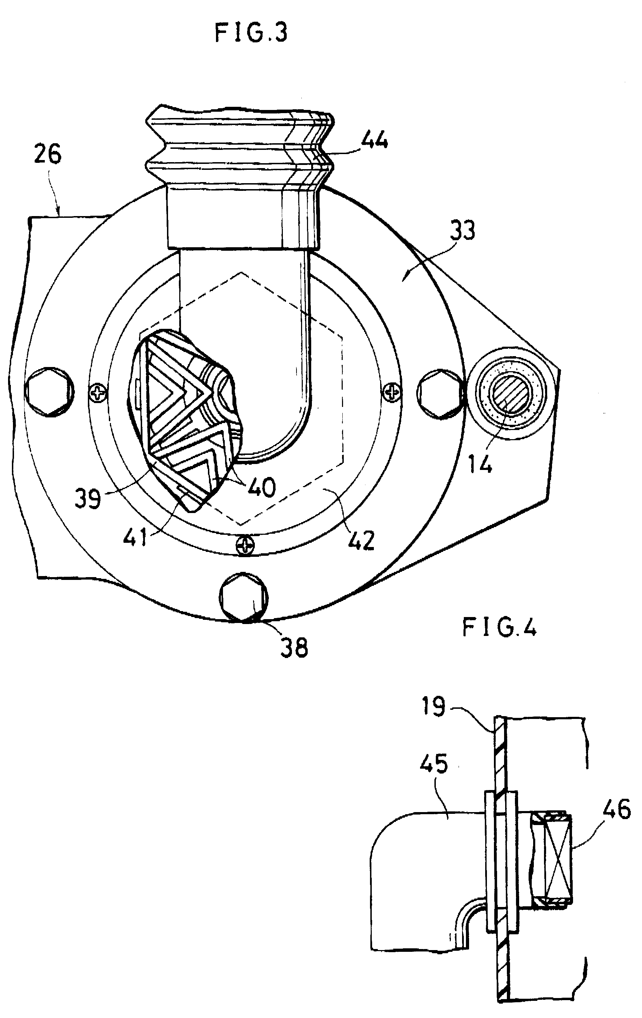

The motor housing 27 is opened to the right side in a direction of vehicle width, and a tubular portion 34 of stator housing 33 of substantially cylindrical shape with bottom is inserted to said opening portion, whereby being blocked by the bottom portion 35. The stator housing 33 is a member for covering the right side opening portion of the motor housing 27, and a boss 36 protruding to inward (central side of vehicle body, it is same hereinafter) to its central portion at its bottom portion 35 and vent 37 of its surroundings are formed and simultaneously, the external peripheral portion is fixed to the motor housing 27 by bolt 38. A driver 39 protruding to sideward in rectangular tubular shape with surrounding the vent 37 is formed to outward of the bottom portion 35. The driver 39 is, as shown in Fig. 3 as well, a member of substantially hexagonal shape provided with driving circuit which will be described hereinafter, a plurality of V-shaped cooling fins 40 are provided to the internal surfaces of its each latus, and simultaneously FET (field effect transistor) 41 which will be described hereinafter is fixed to its external surface.

Further, a cup-shaped cover 42 contained with driver 39 is fixed to outward of the bottom portion 35, and the interior space is made to serve as an air introducing chamber 43. An end portion of flexible duct 44 is connected to the cover 42 (Figs. 1, 2 and 8), and another end portion is communicated to the interior of the container 19 provided to the bottom portion of the seat 17, and a sponge filter 46 for eliminating the dust within air is contained to the inlet opening of joint 45 for connecting its duct 44 to the container 19 (Fig. 4). And, the electric power supplying wire cord 47 for connecting the motor 30 and the driver 39 is led by piercing through the interior of the duct 44, which is wired through the cover 42 to the interior of the air introducing chamber 43 and the motor housing 27.

A partitioning wall 48 is integrally formed to the boundary portion of the motor housing 27 and the transmission case 28, and each interior space of the motor housing 27 and the transmission case 28 formed by the partitioning wall 48 are communicated together.

A rotary shaft 50 of the motor 30 is supported by bearings (51 and 52) provided to the partitioning wall 48 and a boss 36 of the stator housing 33, and an end of the rotary shaft 50 is protruded to the interior of the transmission case 28 by piercing through the partitioning wall 48.

A rotary shaft portion cooling fan 53 for blowing to the vent 49 at a portion approaching to the partitioning wall 48 is provided to the rotary shaft 50 of the motor 30.

Left side surface of the transmission case 28 is covered by a cover 54, and air discharge port 55 is formed at its rear end portion.

The motor 30 is DC brushless motor, which is provided with a rotor 58 arranged with permanent magnet 57 around the external circumference of iron core 56 fixed to the rotary shaft 50 and a stator 62 made of stator coil 61 wound around iron core 60 fixed to the tubular portion 34 of the stator housing 33 by bolt 59. And, a magnet 63 fixed to an end portion of the rotary shaft 50 and a rotor position sensor 65 made of three hole elements 64 arranged to the boss 36 side by surrounding this magnet 63 are provided.

For this motor 30, the stator 62 is previously assembled into the stator housing 33, and then this stator housing 33 is inserted from the opening portion into the interior of the motor housing 27, so that the motor case is constructed.

The belt type stepless speed change transmission 31 is provided with a driving pulley 66 mounted to the rotary shaft 50 protruded from the motor housing 27 side into the interior of transmission case 28 and a driven pulley 68 mounted to an input shaft 67 of reducing gear 32 supported to the rear portion of transmission case 28, and an endless belt 69 is wound between said pulleys 66, 68. The driving pulley 66 is consisted of a fixed face 70 fixed to the rotary shaft 50 and a movable face 71 slidably supported in axial direction to this rotary shaft 50, and a centrifugal force weight 73 movably mounted in radial direction is arranged between this movable face 71 and a ramp plate 72 fixed to the rotary shaft 50. A pulley portion cooling fan 74 is integrally formed to the side surface of the fixed face 70. The pulley portion cooling fan 74 according to this embodiment serves mainly the heat discharge of vicinity of fixed face 70, and it is provided as a subsidiary cooling fan relative to the rotary shaft portion cooling fan 53. Further, the fins may be cut out or made smaller in order to make lighter, in this case, dimension of width direction of the cover 54 can be made smaller.

On the other hand, the driven pulley 68 is consisted of a fixed face 76 supported to a sleeve 75 rotatably inserted relatively around the input shaft 67 of reducing gear 32 and a movable face 77 slidable in axial direction, and the driving power transmitted to this driven pulley 68 is transmitted to the input shaft 67 of reducing gear through a first centrifugal force clutch 78 which is a starting clutch.

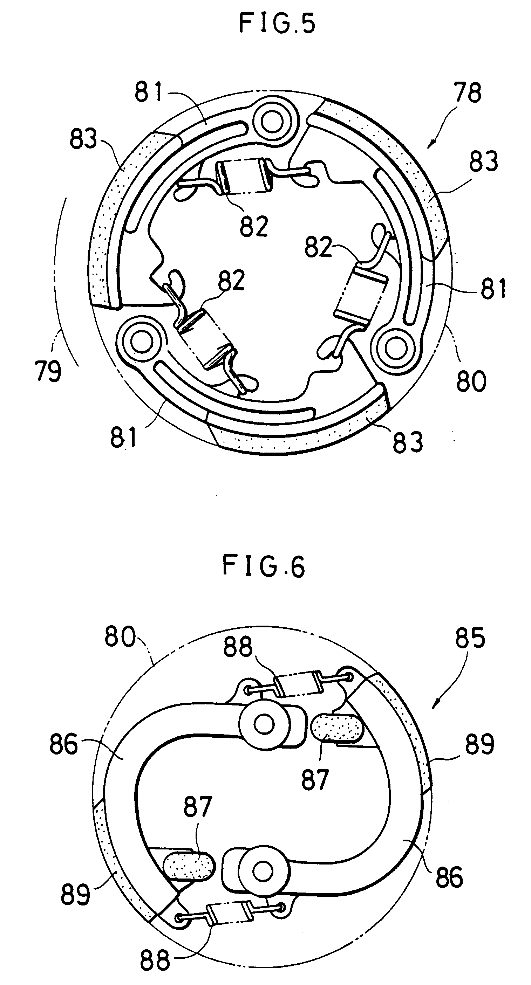

First centrifugal force clutch 78 is an example of a transmission mechanism and automatic centrifugal force clutch in this application. As will be apparent from Fig. 5, it is constructed with a clutch outer 79 fixed to an end portion of the input shaft 67 of reducing gear, a clutch inner 80 fixed to an end portion of sleeve 75, and three arms 81 whose one end is fixed to the side surface of the clutch inner 80, and each arms 81 are connected by coil spring 82 each other and at the same time, a pad 83 capable of coupling with friction to the clutch outer 79 is provided to the external peripheral portion. Further, a set spring 84 is mounted between the clutch inner 80 and mobile face 77. And, the clutch outer 79 and the clutch inner 80 are used in combination with the clutch inner and clutch outer of the second centrifugal force clutch 85.

The second centrifugal force clutch 85 is for the engine brake, as will be described in detail in Fig. 6, in which respective weight 87 is fixed to the other end side of two bent arms 86 whose one end is mounted to the side surface of the clutch outer 79 and interval between both parties are connected by coil spring 88 and simultaneously a pad 89 capable of coupling with friction to the clutch inner 80 is provided thereof.

The first centrifugal force clutch 78 connects the sleeve 75 and the input shaft 67 of reducing gear at, for example, over and established rotational number of little less than maximum efficiency producing rotational number of the motor 30, and the second centrifugal force clutch 85 is established so as to be further less, for example, about 400 rpm than the established rotational number of the first centrifugal force clutch 78.

Final reducing gear 32 is supported through the ball bearings in which the input shaft 67 of reducing gear and intermediate shaft 90 are respectively provided to the transmission case 28 and the reducing gear cover 91 and the rotation of input gear 92 of the input shaft 67 of reducing gear is transmitted through two intermediate gears 93, 94 of the intermediate shaft 90 to an output gear 96 of vehicle shaft 95.

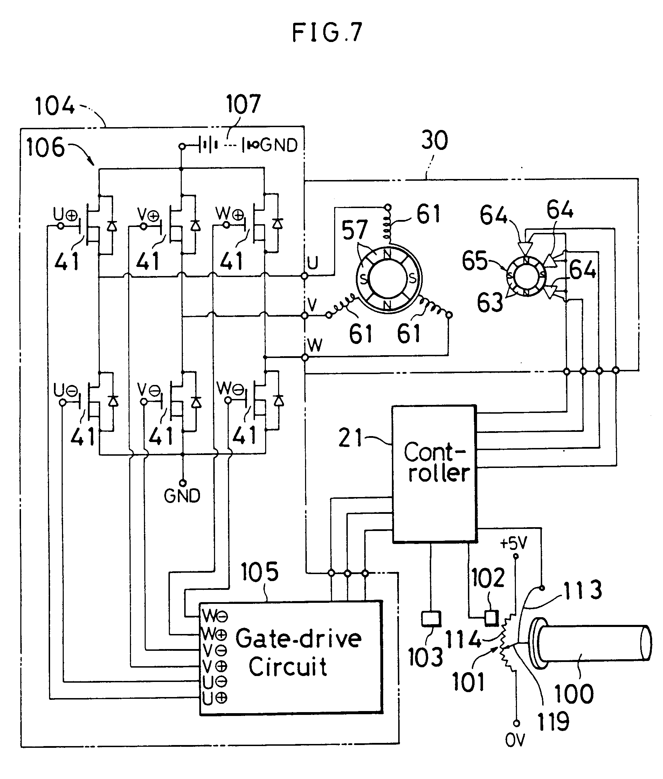

Fig. 7 is a circuit diagram for showing a control system of the motor 30, in which a potential of potentiometer 101 connected to an accelerator grip 100 of direction steering handle 10 so as to control the rotational speed of the motor 30 and phase signal of the rotor 58 detected by the rotor position sensor 85 are inputted to the controller 21, and further, potentiometer 101, switch 102 for detecting a minimum operational angle of the acceleration grip 100, brake switch 103, vehicle speed sensor which is not shown and driving circuit 104 are connected to the controller 21.

The controller 21 has a microcomputer, which determines a duty factor of current for conducting to the motor 30 according to the output signal of potentiometer 101 and the vehicle speed sensor, and determining the phase of alternating magnetic field in the stator coil 61 according to the output signal of the rotor position sensor 65, and outputting a PWM signal representing the phase and duty factor for each stator coil 61 to a driving circuit 104, and further discriminating the control state according to the output of the switch 102 and the brake switch 103 whereby outputting a control command signal to the driving circuit 104 in the time of braking. The driving circuit 104 includes a gate driving circuit 105 and switch circuit 106, and the gate driving circuit 105 is connected to the controller 21, and the switch circuit 106 to the stator coil 61, the switch circuit 106 is arranged such that three pairs of FETs 41 wired in series are connected in parallel between a battery 107 and ground GND, and the gate of each FET 41 is connected to the gate driving circuit 105, and further respective source-drain connection nodes are connected respectively with three terminals of the stator coil 61 which being star-wired respectively. This driving circuit 104 drives the FET 41 to be ON-OFF according to the PWM signal outputted by the controller 21 whereby conducting the current for generating the alternating magnetic field to the stator coil 61 of the motor 30, and the controller 21 conducts the terminal to the stator coil 61 by the FET 41 which outputs the control command signal whereby executing the electrical control by the motor 30.

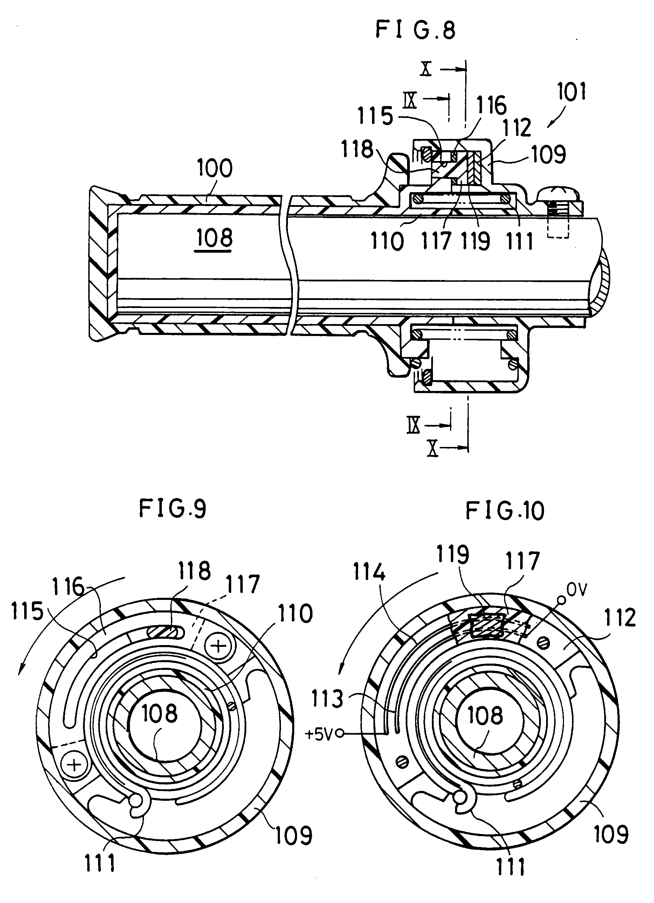

Structure of the potentiometer is shown in Figs. 8 to 10. A torsional spring 111 for urging an acceleration grip 100 toward the idling position is mounted between a fixed bracket 109 of ring shape fixed to the middle of a handle pipe 108 and a rotary bracket 110 of tubular shape which is rotatably mounted on the front end of the handle pipe 108, and on the external circumference of which is mounted integrally by pressure the acceleration grip 100. The potentiometer 101 for operating by the rotational operation of the acceleration grip 100 includes a resistor 114 and a conductive body 113 printed in parallel to the surface of arc-shaped printed board 112 fixed to the bottom of the fixed bracket 109, and potentials of 0 volt and 5 volt are applied to this conductive body 113 and resistor 114 respectively. A guide plate 116 having an arc-shaped guide groove 115 is fixed in parallel with the printed board 112 at the interior of the fixed bracket 109, and a protrusion 118 formed to the rear surface of the guide groove 115 of the guide plate 116 is held to the rotary bracket 110 by passing through the guide groove 115 of the guide plate 116. A metal plate 119 connected electrically to the controller 21 is fixed to the front surface of sliding member 117 so as to be contacted simultaneously to the resistor 114 and the conductive body 113 of the printed board 112. The potential of the metal plate 119 becomes about 0,5 volt in case when the acceleration grip 100 is positioned at the shown idling position, and when the acceleration grip 100 is rotated in arrow direction toward the full load position, its potential is increased gradually up to about 4,5 volt in case of this embodiment.

Fig. 11 is a modelling graph for illustrating an establishing method of speed changing condition, wherein a motor characteristic of the motor 30 is shown by (I), and speed change characteristic of the belt type stepless speed change transmission 31 is shown by (II).

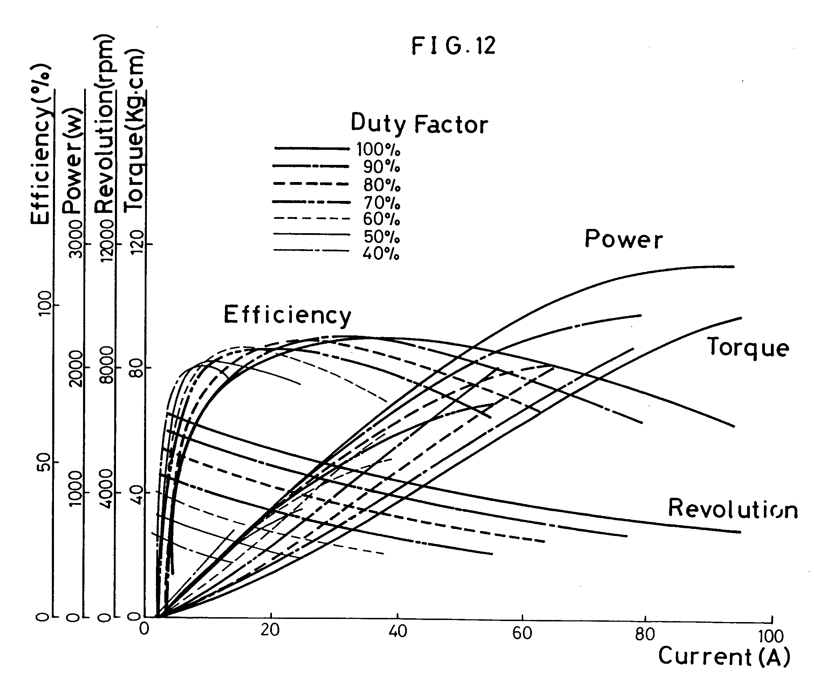

At first, speed change condition in Fig. 11 will be described. The motor characteristic shown by (I) in Fig. 11 is corresponded to the case of 100 % of duty factor, in which current in A is shown on abscissa, and efficiency in %, output in W, rotational number in rpm of motor 30 and torque in kg.cm of motor 30 are shown on ordinates. Wherein, in efficiency, as apparent from Fig. 12, a peak of maximum efficiency ($\eta$ max) being of approximately 90% at about 37,5 A is formed, and the rotational number of the motor 30 is approximately 4500 rpm at this moment.

And, over 80 % is maintained at the range from about 16 A to 58 A, and this range W (shown to (II) side) is corresponded to a vicinity of maximum efficiency in this embodiment. The rotational number of the motor within this range is about from 3500 to 5800 rpm.

On the other hand, the belt type stepless speed change transmission 31 is established with a condition so as to be speed-changed only when it is operated within the range of over 80 % in efficiency included with maximum efficiency $\eta$ max of motor 30. That is, the diagram (II) takes vehicle speed in km/h abscissa, and rotational number in rpm of motor 30 and torque of rear wheel driving shaft in kg.cm on ordinates, and surrounding by hatched lines the range of rotational number of motor corresponding to the range of over 80 % in efficiency. The speed change curve may become within this range, and the clutch meets - what means that it is not the actual clutch means but is the operation starting point (timing) of the stepless belt transmission - at a point P1 which is a little lower rotational number than the maximum efficiency ($\eta$ max), producing rotational number No (4500 rpm) to be obtained with maximum efficiency whereby both the speed and the rotational number of the motor 30 are raised along the low ratio, and thereby the speed change is started with the constant rotational number from a point P2 of maximum efficiency producing the rotational number No. This speed change is increased in speed with stepless manner by maximum efficiency ($\eta$ max) producing the rotational number No per se whereby being executed up to the point P3 crossing with the top ratio. Thereafter the rotational number of the motor 30 and the vehicle speed are raised together along the top ratio and then it reaches a limiting point P4 of 80 % in efficiency.

The speed at this point P4 is established as a limiting speed (for example 60 km/h). When it is done as this, the running is possible by maintaining a maximum efficiency ($\eta$ max) of the motor 30 always within the usual speed change range (interval between P2 and P3)

Further, though the above-described case is an example that the duty factor is taken as 100 %, in case when a running resistance is considered, as will be described hereinafter, the duty factor within the usual range can be established a little lower.

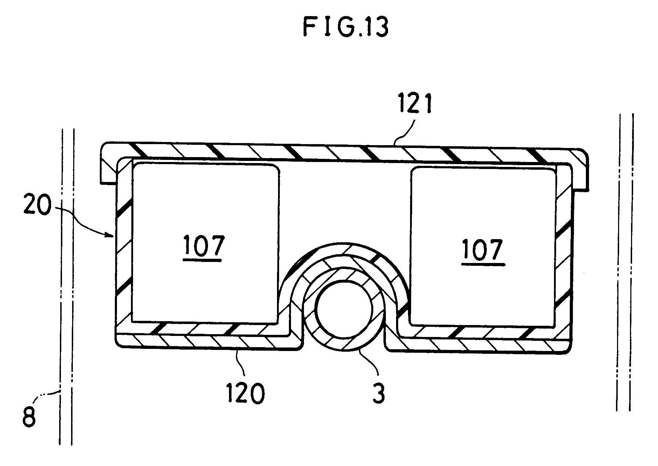

Fig. 13 shows a supporting structure of the battery box 20 wherein the battery box 20 is supported on a supporting plate 120 fixed to the central frame 3 by protruding toward the right and left direction, and a battery 107 is contained within its interior to the right and left by interposing the central frame 3. The battery 107 supplies an electric power to the motor 30 according to the control of the controller 21.

And next, the operation of this embodiment will be described in detail hereinafter.

This electric motor 30 driving automatic bicycle is constructed such that the motor 30 is connected to the rear wheel 13 via the belt-type stepless speed change transmission 31, first centrifugal force clutch 78, second centrifugal force clutch 85 and final reducing gear 32, and the current of duty factor corresponding to the vehicle speed and the handling angle of the acceleration grip 100 is conducted, whereby running by the driving power of the motor 30.

That is, when the motor 30 is started by a start switch which is not shown, the rotary shaft 50 is rotated. In the time when the acceleration grip 100 is positioned at the idling position and the rotational speed of the motor 30 is small, first and second centrifugal force clutches 78, 85 are in a state of cut-off, and the driving power of the motor 30 is not transmitted to the rear wheel 13 and the belt-type stepless speed change transmission 31 is in an idle running state. Therefore, the current and torque of the motor 30 are not raised over the requirement, and big current and high torque produced originally at the time of starting and in low rotational range as well as the load under the state of low efficiency can be avoided. When the acceleration grip 100 is rotated from this state whereby the rotational speed of the motor 30 is increased, the centrifugal weight 73 is moved axially outwardly along the ramp plate 72 fixed to its rotary shaft 60, and thereby the movable face 71 of the driving pulley 66 is moved in the direction for approaching the fixed face 70.

According to this, the effective radius of the driving pulley 66 is increased and at the same time the movable face 77 of the driven pulley 68 is driven in a direction of leaving away from the fixed face 76 through the endless belt 69, whereby its effective radius is decreased. As a result, reducing the ratio of the belt-type stepless speed change transmission 31 is decreased whereby the rotational speed of the sleeve 75 for rotating together with the driven pulley 68 is increased, and consequently, when the rotational number of the driven pulley 68 reaches over the established rotational number of vicinity of maximum efficiency producing the rotational number No of the motor 30, the first centrifugal force clutch 78 is connected whereby the driving power of the motor 30 is transmitted to the input shaft 67 of the reducing gear, and thereby the rear wheel 13 is driven through the final reducing gear 32. And thereafter, it is speed-changed in response to the speed change curve shown in Fig. 11 and at this moment, the efficiency of the motor 30 is maintained at the vicinity of maximum efficiency $\eta$ max. Particularly, in the usual speed change range it is maintained in approximately maximum efficiency $\eta$ max at 100 % of the duty factor.

This matter can be said that it is a desirable establishment considered with the current using custom, when considering that the conventional small type scooter is apt to be used in a state that the throttle is substantially fully opened.

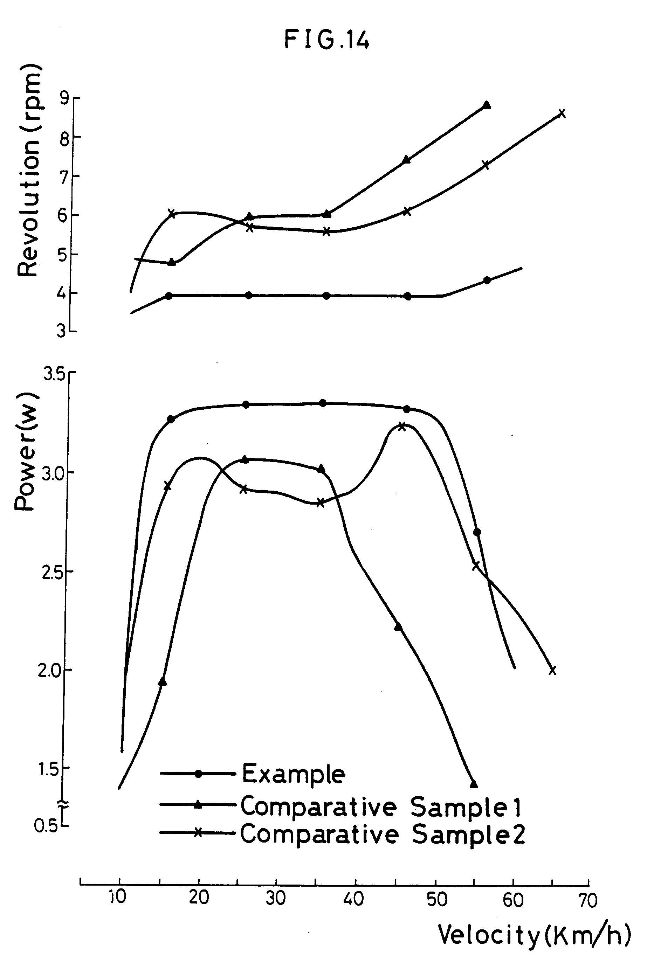

Fig. 14 is a graph for showing the running capacity, the vehicle speed in km/h is taken on abscissa, and the rear wheel output in W, and the rotational number in rpm of the motor 30 or the engine is taken on the ordinates, and then the capacities of comparing examples 1 and 2 are noted in combination. As will be apparent from this graph the article of this embodiment, in case of comparing with the comparing examples 1 and 2, is obtained with lower rotation and higher output. Therefore, the torque and current required to the rotation of the motor 30 becomes relatively lower, and the duty of the motor 30 becomes relatively less, and thereby the consuming electric power quantity and heat generating quantity suppressed. And, since the discharging efficiency of the battery 107 is increased and being made to long life and simultaneously the component such as the motor 30 can be set corresponding to the small current and low heat generation quantity, it can be made to be light weight and miniaturization. Further, in the usual range, the rotational number of the motor 30 and the rear wheel output can be maintained within extremely wide range and substantially in constant, without appearing a mountain or valley as comparing example, broad flat torque characteristic can be realized, and thereby smooth running can be obtained.

And, when the duty factor in the usual range is set, e.g. to 60 % excessive output against the running resistance can also be ensured. That is, as the running resistance curve is written in combination in the diagram (II) of Fig. 11, in the interval between a point P2 to a point P3, the required torque is raised as much as $\alpha$. Wherein, when each vehicle speed and driving shaft torque of points P2 and P3 are V2, T2, V3, T3 within the interior of the belt-type stepless speed change transmission 31, it becomes that the driving shaft torque at the point P2 is decreased as much as V2/V3 times. Therefore, in order to increase the driving torque and the vehicle speed by directing from the point P2 toward the point P3, the torque increasing as much as

$$\Delta T = T3 - T2 = \alpha + (V3/V2) T2$$

is required.

However, since the motor characteristic by the duty factor corresponding to the diagram (I) becomes as shown in Fig. 12 when the duty factor of the motor in the usal range is previously set to, e.g. 6o % , by increasing the duty factor so as to tie up in turn each peak of efficiency curve by the duty factor from the point P3, the output increase for directing toward the point P4 is ensured, and it is possible to overcome the increase of the running resistance.

That is, the setting of the usual range duty factor in this case to be 60 % enables to ensure 40 % as duty factor of excessive amount against the running resistance, and smoother and powerful running becomes possible.

Further, the second centrifugal force clutch 85 is connected when the rotational number of the input shaft 87 of the reducing gear reaches over the established rotational number less than the established rotational number of the first centrifugal force clutch 78 at a state that power is transmitted from the rear wheel 13 to the belt-type stepless speed change transmission 31.

Accordingly, in the time of speed reducing or braking, the second centrifugal force clutch 85 is connected whereby the torque produced to the rear wheel 13 is transmitted to the motor 30, therefore, the motor 30 can be used as a load. Further, the established rotational number of the second centrifugal force clutch 85 is less than the established rotational number of the first centrifugal force clutch 78, and since the second centrifugal force clutch 85 maintains the connected condition even after the first centrifugal force clutch 78 is left away in the time of speed reducing, speed reducing can be smoothly executed whereby good running feeling can be obtained. Particularly, in this embodiment, since electric braking is carried out by the motor 30 even in the time of braking, a better braking characteristic can be obtained.

Further, the cooling system within the power unit 1 will be described in detail hereinafter.

When the rotary shaft portion cooling fan 53 providing to the rotary shaft 50 by the driving of the motor 30 is rotated, relatively clean air within the container 19 is further cleaned by passing the filter 46 provided to the joint 45 (Fig. 4), and being introduced into the interior of the cover 42 through the duct 44. This cooling air passes through the midst of the cooling fins 40 of the driver 39 contained within the air introducing chamber 43 whereby cooling the driver 39 which has become high temperature by the heat generation of the driver and the like. The air that has cooled the driver 39 cools the rotor position sensor 65, and then flowing from the vent 37 of the stator housing 33 into its interior and cooling the stator coil 61 of the heat-generated motor 30, whereby a deterioration of the capacity according to the heat generation of the motor 30 can be prevented. Thereafter, flowing from the vent 49 formed to the partitioning wall 48 into the interior of the transmission case 28, while cooling the belt-type stepless speed change transmission 31 as well as the pulley portion cooling fan 74, and being discharged from the discharge outlet 55 to the exterior.

Thus, when the rotary shaft portion cooling fan 53 is positioned at the middle from the motor 30 to the belt-type stepless speed change transmission 31 whereby being made to be common, the cooling mechanism can be simplified. And, since this cooling air can cool the driver 39, it is not necessary to provide exclusive cooling mechanism and it is advantageous. Further, since the rotor position sensor 65 which dislikes dust is provided upstream side cooling air, adhering of dust can extremely be prevented. In this case, since the filter 46 is provided, it becomes further clear. In addition, since the inlet of the duct 44 is opened to the space of the interior of the vehicle body, clean air of less dust and moisture can be introduced. Further, according to this embodiment, although the duct 44 is connected to the interior of the container 19, this duct 44 can be connected to the suitable place of the frame pipe. Similarly, since the motor 30 is located upstream of the cooling air, the motor 30 can avoid the heating effect from the belt-type stepless speed change transmission 31 side. At the same time, when the first cooling fan 53 is made coaxially with the rotary shaft 50, the power unit 1 can be made to be small size and light weight. And, since the discharge outlet 55 is provided at the rear end portion of the transmission case 28, the entire transmission mechanism can be cooled.

Furthermore, this embodiment includes many advantages other than above described. Firstly, since the motor housing 27 and the transmission case 28 are made integrally, the number of parts can be decreased and at the same time, since the stress can be dispersed to both sides, strength is increased and simultaneously heat dispersion becomes good whereby the cooling efficiency of the motor housing 27 side is increased.

Moreover, since the stator 62 of the motor 30 can be assembled into the interior of the motor housing 27 by inserting from its opening portion, work is easy, and particularly, according to this embodiment, since it is previously fixed to the stator housing 33 and this is inserted from the opening portion of the motor housing 27, its assembling is further easier.

Next, since the rotary shaft 50 of the motor 30 serves concurrently as the input shaft of the belt-type stepless speed change transmission 31, axial directional dimension of the power unit 1 can be reduced. Further, since the electric power supply wire cord 47 for connection with the motor 30 and the driver 39 is pierced through the interior of the duct 44, mud and moisture and the like splashed to the electric power supply cord 47 can be made so as not to be directly disturbed even without using other particular member. Further, when the power supply cord 47 is previously passed through the cover 42 side, the cover 42 can be fixed at the wired state, whereby assembling efficiency is increased. In this case, it is not necessarily required to passing through the cover 42 or its similar functional parts. And, since the electric power supply cord 47 is directly drawn out of the motor housing 27 of the opposite side of the belt-type stepless speed change transmission 31 to the exterior , it can be passed to such place that does not interfere with the belt-type stepless speed change transmission 31.

Hereinafter, another embodiment according to the present invention will be described in detail. And, with respect to the common parts with the previous embodiment, same reference symbols or numerals are used, and different points only will be described in order to avoid double explanation, and with respect to the other parts, important matter only designated with reference symbols and shown in the drawings, and explanation will be deleted except particularly necessary case (hereinafter same).

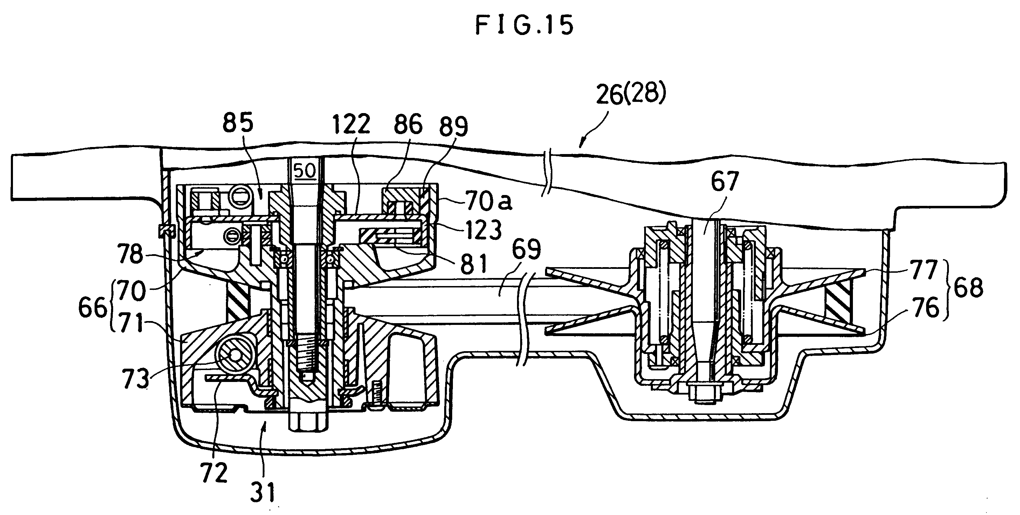

Fig. 15 is second embodiment that first centrifugal force clutch 78 and second centrifugal force clutch 85 are provided to the driving pulley 66 side, and only the parts corresponding to the belt-type stepless speed change transmission 31 of Fig. 2 are shown. In this embodiment, both clutches are contained to the rear surface of the fixed face 70 of the driving pulley 66. That is, the first centrifugal force clutch 78 utilizes the fixed face 70 as a clutch outer, and an arm 81 fixed to the base portion side of the fixed face 70 is made to be able to slide with the internal surface of the external circumferential flange 123 of the clutch inner 122 fixed to the rotary shaft 50. On the other hand, the second centrifugal force clutch 85 utilizes the internal peripheral wall 70a of the fixed face 70 that a pad 89 of a bent arm 86 fixed to the clutch inner 122 extended in parallel with the rotary shaft 50 of the motor as a clutch outer and thereby it is made slidable to this. When it is made as these, the driving pulley 66 can be effectively utilized, and reducing of the number of parts and making to be compact become possible.

Further, both of these clutches can be provided to the movable face 71 side of the driving pulley 66, and also it can be provided to the movable face 77 of the driven pulley 68 (refer to Fig. 19).

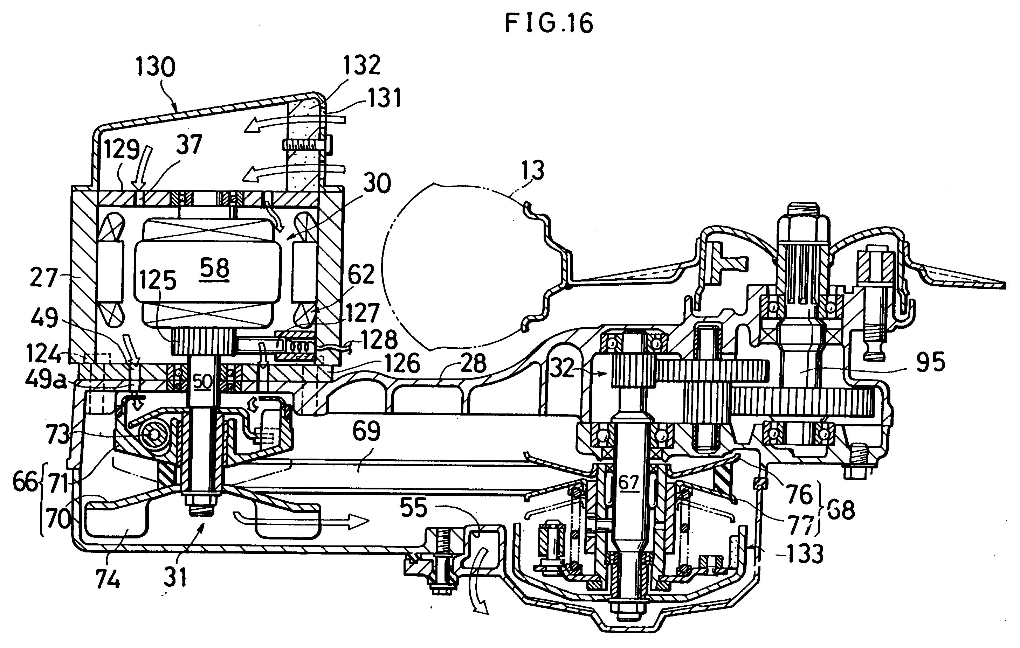

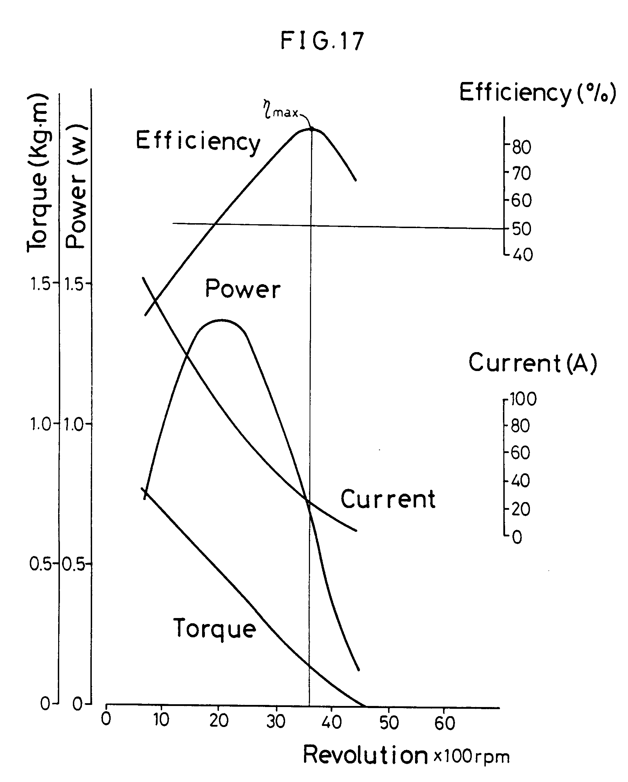

Figures 16 and 17 show the third embodiment utilizing a brush-type motor.

As shown in Fig. 16, the motor housing 27 is separately contructed from the transmission case 28, and being fixed by bolt 124. The stator 62 of the motor 30 is fixed to the internal surface of the motor housing 27, and the commutator 125 is contacted with the brush 127 provided to the side portion of the motor housing 27 at between the rotor 58 and the wall 126 connected to the transmission case 28 of the motor housing 27. Electric power supply cord 128 of the brush 127 is extended to the exterior of the transmission case 28 by piercing through the wall portion of the motor housing 27.

A vent 37 is provided to the cover 129 for covering the right side opening portion of the motor housing 27, and an air cleaner 130 is provided to its right side. A suction inlet 131 for communicating to the outside air is formed to the wall surface of the air cleaner 130, and filter element 132 is contained to the inside of this portion. The interior of the air cleaner 130 is communicated with the interior of the motor housing 27 through the vent 37. And another vent 49 is also provided to the wall 126, and another more vent 49a accorded with this is formed to the transmision case 28 side superposing with the wall 126.

A transmission mechanism according to this application and automatic centrifugal force clutch 133 which is an example of automatic centrifugal force clutch are provided to the driven pulley 68 side of the belt-type stepless speed change transmision 31 connected to the rotary shaft 50 of the motor 30.

According to this embodiment, forced cooling for the parts of the motor 30 and the belt-type stepless speed change transmission 31 of the transmission case 28 is simultaneously carried out by the single pulley portion cooling fan 74.

Other parts are generally same with the first embodiment.

Fig. 17 shows a motor characteristic of this embodiment, rotational number in rpm of the motor 30 is taken on abscissa, and efficiency in %, output in W, current in A and torque in kg•m are taken on ordinates. In this embodiment, since maximum efficiency $\eta$ max is obtained in case when the rotational number of motor 30 is about 3700 rpm and efficiency is sufficiently increased as it is approximately over 50 % at 2000-4500 rpm, the efficiency corresponding to this rotational number is the vicinity of maximum efficiency according to this embodiment. Particularly, according to this embodiment, since the duct portion for the cooling air can be made in short and the brush 127 is located at opposite side of the air cleaner 130 by interposing the motor 30, effect of the brush 127 causing from dust and moisture sucked in together with air can be decreased. Furthermore, since the electric power supply cord 128 is drawn out of side portion of the motor housing 27 to the exterior thereof, even though it is made as these, they do not interfere with the belt-type stepless speed change transmission 31.

Figures 18 to 22 show the fourth embodiment. Fig. 18 shows a side view of the electric motor driving automatic bicycle according to this embodiment, and Figs 19 shows a cross sectional view of said power unit, and the front frame 2 and central frame 3 are channel-shaped. The power unit 1 is pivotally fixed to a plate-shaped connecting member 134 extended long to rearward from the central frame 3, and being contained within recess 135 of convex to vehicle center side formed to the sideward of the rear wheel 13. The motor 30 is arranged higher than the wheel shaft 95. And, a controller 21 is contained within small container 19 formed to downward of seat 17.

Interior structure of the power unit 1 has a similar basic structure approximately as previous embodiment as shown in Fig. 18, but it is constituted in such a manner that air cleaner is deleted, and final reducing gear 32 is simplified, and input gear 92 formed to the input shaft 67 of reducing gear 32 and output gear 96 on the wheel shaft 95 are directly meshed each other. Automatic centrifugal force clutch 133 is arranged to vehicle body center side to the rear surface of movable face 77 forming the driven pulley 68. Pulley portion cooling fan 74 is arranged coaxially with the rotary shaft 90 separately to the driving pulley 66.

According to this embodiment, since the power unit 1 assembled with the motor 30 is miniaturized whereby being contained within the recess of side surface of the rear wheel 13, entire unit is made further lighter and slimmer at the same time external appearance becomes neat and smart. Further, since the motor 30 is disposed higher than the wheel shaft 95, mud and water become difficult to enter the motor 30.

And, as shown in Figs. 18 and 20, battery 107 is contained within the central frame 3. According to this, assembling and disassembling of the battery 107 become easy. Further, the battery 107 is effectively protected by the central frame 3. This is same in the front frame 2 side.

Furthermore, the battery 107 according to this embodiment, as shown in Fig. 21, is connected in parallel with the controller 21 and the motor 30 at the same time, the battery 107 itself is structured to use a plurality of individual batteries $107_1$ --- $107_N$ by sequential switching manner. This plurality of batteries $107_1$ --- $107_N$ are connected in parallel, and remaining capacity indicator of the battery is constructed by the shifting switches $SW_1$ --- $SW_N$, and lamps $L_1$ --- $L_N$.

That is, since constant voltage is maintained when sufficient discharge capacity is present respectively to each individual batteries $107_1$ --- $107_N$, each lamp $L_1$ --- $L_N$ is all lighted brightly. Wherein, when, for example, the switch $SW_1$ is firstly turned ON and the motor 30 is driven, the lamp $L_1$ is brightly lighted in the beginning, but soon the discharge capacity of the individual battery $107_1$ is dropped down by the load of motor 30 whereby the voltage is dropped down.

At this moment, since the internal resistance of the motor 30 is less than the lamp $L_1$, the lamp current is gradually decreased, and the lamp $L_1$ becomes dark. Since this lamp $L_1$ condition means the indication in short of remaining discharge capacity of the battery $107_1$, a rider may turn ON, for example, the switch $SW_2$ for switching to the battery $107_2$. Thus, in accordance with the indication based on the lighting condition of lamp, they can be used by switching to one that has a discharge capacity in turn one by one to next new one.

Fig. 22 is a specific example of remaining capacity indicator, which shows a remaining capacity indicator 136 constituted in such a manner that interior of one frame member is partitioned to five rooms aligned linearly, and five lamps $L_1$ --- $L_5$ (that is N =5 ) are respectively contained by one into each room. But, the number of applying lamps are voluntarily selected.

Thus, when respective lamps $L_1$ --- $L_5$ are aligned linearly, the number of batteries remaining with discharge capacity can be grasped surely according to the number of lamps lighted brightly. For example, when all are lighted brightly, indicating all of individual batteries $107_1$ --- $107_5$ have sufficient discharge capacity.

And, in case when the discharge capacity is 1/2, about half number (in this embodiment, $L_3$ - $L_5$ of three among five) are brightly lighted, and those of corresponding to the individual batteries having no discharge capacity ($L_1$ - $L_2$ of two) are darkly lighted. When all are blacked out (or darkly lighted), it can be instantly recognized that all batteries have no remaining discharge capacity.

Although the usual remaining capacity indication of battery used conventionally is indicated by the voltage drop of the battery, since the voltage varies by temperature, there is a case of using a temperature compensation circuit and the like so as to obtain a correct indication. And, in case of alkali battery (Ni - Cd, Ni - Zn) and the like, since the quantity of voltage drop is small, and having a characteristic that the voltage is not greatly dropped until the discharge capacity becomes over 90%, there may be difficulty to confirm the remaining capacity. In this point, according to this embodiment, since the remaining capacity corresponding to the using number of battery can be recognized, that of simple in structure and correct remaining capacity indication can be expected.

Figs. 23 and 24 show the fifth embodiment that the motor and the transmission mechanism are separately constructed. Fig. 23 shows a side view of right side of rear portion of vehicle body, wherein the motor 30 is connected to the bracket 138 provided by protruding rearwardly the side portion bracket 137 to the rear frame 4, and at the same time, a supporting plate 140 extended to frontward of box 139 meshed with one end of the motor 30 is connected to a bracket 141 extended from the rear frame 4 to rearward by bolt 142 whereby being fixed to the rear frame 4 side.

Fig. 24 is a diagram for showing a transmission mechanism portion by sectional view, wherein rear frame 4 is provided so as to make pair to right and left, and both sides of front end portion of the transmission case 28 are rotatably supported to each rear end portions of supporting arms 144, 145 extended to rearward respectively from middle portion of cross pipe 143 connected between said both parts and the rear frame 4 of left side. Belt type stepless speed change transmission 31 similar to the third embodiment, final reducing gear 32 and automatic centrifugal force clutch 133 are provided within the transmission case 28.

Connection of the transmission case 28 and the supporting arm 144 is made by engaging a boss portion 147 formed to the right side of the transmission case 28 to a bearing 146 provided to the rear end portion of supporting arm 144.

Input shaft 150 of the transmission of the belt type stepless speed change transmission 31 is arranged in parallel with cross pipe 143 on same axis of pivot bolt 149, and the driving pulley 66 is supported to an end, and other end is entered the interior of gear box 139, whereby being connected with bevel gear 151, and at the same time, being rotatably supported by ball bearing provided at wall of gear box 139 and boss portion 147 of transmission case 28. Bevel gear 151 is meshed with bevel gear 152 mounted to an end of rotary shaft 50 of the motor 30.

When it is made as these, since the motor side is made not to move, and only the transmission case 28 side oscillates around the input shaft 150 of transmission and pivot bolt 149, spring load quantity is decreased, and simultaneously, the oscillating portion can be made to required minimum limitation, and thereby it is advantageous for the vehicle lay out. Further, each supporting method with respect to the motor 30 and the rear frame 4 of the transmission case 28 is not limited to this embodiment but various methods are possible.

Thus, although the embodiments of the present invention are described in detail, the present invention is not limited by aforementioned respective embodiments, and without departing from this invention described in the claims, various changes can be carried out. For example, the power unit 1 is not limited to the automatic bicycle but it can be applied for other vehicle such as automatic tricycle.

**Claims**

1. Vehicle which runs by transmitting the rotation of an electric battery (20)- driven motor (30) to a driving wheel (13) through a stepless speed change transmission (31) and an automatic starting clutch (78, 85; 133),
   **characterized in that**
   said stepless speed change transmission (31) is operated in a revolution range of said motor which is higher than a revolution number corresponding to the maximum power of said motor (30) to maintain the speed of the motor (30) within a range preselected to be within a predetermined percentage of maximum motor efficiency ($\eta_{max}$).

2. Vehicle according to claim 1, which is characterized in that said automatic starting clutch (78, 85; 133) is a centrifugal force clutch (78, 85; 133).

3. Vehicle according to any of claims 1 or 2 which is characterized in that said speed change transmission (31) changes the speed within a range of transmission ratios limited by a predetermined lower limit and a predetermined upper limit.

4. Vehicle according to claim 2 characterized in that the duty factor of the motor (30) for driving the vehicle under normal conditions of running resistance is set at less than 100%, and in that a controller (21) is provided for increasing the duty factor to compensate for an increase ($\alpha$)

in vehicle running resistance.

5. Vehicle according to any of claims 1 to 4 characterized in that said driving wheel (13) is rotatably supported (at 14) by a transmission case (28) pivotally fixed to the vehicle body (3) to be able to oscillate, a belt type stepless speed change transmission (31) connecting the driving wheel (13) to said motor (30) provided within said transmission case (28), said motor (30) being comprised within a motor housing (27) provided at a side portion of the transmission case (28).

6. Vehicle according to claim 5 characterized in that the entire transmission case (28) is comprised within a recess (135) formed in a side surface of the driving wheel (13) (Fig. 18.

7. Vehicle according to claim 5 or claim 6 characterized in that said motor housing (27) and said transmission case (28) are integrally structured.

8. Vehicle according to any of claims 5 to 7 characterized in that an electric power supply cord (47) of the motor (30) is fixed to a side of a member (35) for covering an opening portion to be fixed from sideward of the motor housing (27).

9. Vehicle according to any of claims 5 to 8 characterized in that a communicating port (49) is provided at a boundary of the motor housing (27) and the transmission case (28), and the motor (30) and the belt type stepless speed change transmission (31) are cooled by at least one common cooling fan (53, 74).

10. Vehicle according to claim 9 characterized in that at least one cooling fan (53, 74) is provided at a driving pulley (66) of the belt type stepless speed change transmission (31).

11. Vehicle according to claim 9 or claim 10 characterized in that a cooling fan (53) is located adjoining to the communicating port (49) within the motor housing (27), and is mounted to a rotary shaft (50) of the motor (30).

12. Vehicle according to any of claims 5 to 11 characterized in that a duct (44) has one end in communication with the interior of the motor housing (27) at the opposite side of the transmission case (28) and has another end opening to an interior space (19) of the vehicle body (3) which feeds cooling air forcibly to the interior of the motor housing (27).

13. Vehicle according to claim 12 characterized in that said electric power supply cord (47) of the motor (30) is arranged within the duct (44).

14. Vehicle according to any of claims 7 to 13 characterized in that the electric power supply cord (47) of the motor (30) is directly drawn out of the motor housing (27) to its exterior without passing through the transmission case (28).

**Patentansprüche**

1. Fahrzeug, welches durch Übertragen der Drehung eines von einer elektrischen Batterie (20) getriebenen Motors (30) über ein stufenloses Drehzahländerungsgetriebe (31) und eine automatische Anfahrkupplung (78, 85; 133) auf ein Antriebsrad (13) fährt, **dadurch gekennzeichnet**, daß das stufenlose Drehzahländerungsgetriebe (31) in einem Drehzahlbereich des Motors betrieben wird, der oberhalb einer der maximalen Leistung des Motors (30) entsprechende Drehzahl liegt, um die Drehzahl des Motors (30) innerhalb eines Bereichs zu halten, der derart vorgewählt ist, daß er sich innerhalb eines vorbestimmten Prozentsatzes des maximalen Motorwirkungsgrads (nmax) befindet.

2. Fahrzeug nach Anspruch 1, **dadurch gekennzeichnet**, daß die automatische Anfahrkupplung (78, 85; 133) eine Zentrifugalkraftkupplung (78, 85; 133) ist.

3. Fahrzeug nach einem der Ansprüche 1 oder 2, **dadurch gekennzeichnet**, daß das Drehzahländerungsgetriebe (31) die Drehzahl innerhalb eines Bereichs von Übersetzungsverhältnissen ändert, der durch einen vorbestimmten unteren Grenzwert und einen vorbestimmten oberen Grenzwert begrenzt ist.

4. Fahrzeug nach Anspruch 2, **dadurch gekennzeichnet**, daß der Nutzfaktor des Motors (30) zum Antreiben des Fahrzeugs unter normalen Fahrwiderstandsbedingungen auf unter 100 % festgesetzt ist, und daß eine Steuereinrichtung (21) zum Erhöhen des Nutzfaktors vorgesehen ist, um einen Anstieg ($\alpha$) des Fahrwiderstands des Fahrzeugs zu kompensieren.

5. Fahrzeug nach einem der Ansprüche 1 bis 4, **dadurch gekennzeichnet**, daß das Antriebsrad (13) (bei 14) von einem Getriebegehäuse (28) drehbar gehalten ist, weiches an dem Fahrzeugkörper (3) hin- und herschwenkbar befestigt ist, wobei ein stufenloses Drehzahländerungsgetriebe (31) des Typs mit Riemen, weiches das Antriebsrad (13) und den Motor (30) verbindet, in dem Getriebegehäuse (28) vorgesehen ist, wobei der Motor (30) in einem Motorgehäuse (27) aufgenommen ist, das an einem Seitenabschnitt des Getriebegehäuses (28) vorgesehen ist.

6. Fahrzeug nach Anspruch 5, **dadurch gekennzeichnet**, daß das gesamte Getriebegehäuse (28) in einer Ausnehmung (135) aufgenommen ist, die in einer Seitenfläche des Antriebsrads (13) ausgebildet ist (Figur 18).

7. Fahrzeug nach Anspruch 5 oder Anspruch 6, **dadurch gekennzeichnet**, daß das Motorgehäuse (27) und das Getriebegehäuse (28) einstückig aufgebaut sind.

8. Fahrzeug nach einem der Ansprüche 5 bis 7, **dadurch gekennzeichnet**, daß eine Zufuhrleitung (47) für elektrische Energie des Motors (30) an einer Seite eines seitlich am Motorgehäuse (27) zu befestigenden Elements (35) zum Abdecken eines Öffnungsabschnitts befestigt ist.

9. Fahrzeug nach einem der Ansprüche 5 bis 8, **dadurch gekennzeichnet**, daß in einem Grenzbereich des Motorgehäuses (27) und des Getriebegehäuses (28) eine Verbindungsöffnung (49) vorgesehen ist, und der Motor (30) und das stufenlose Drehzahländerungsgetriebe (31) des Typs mit Riemen durch wenigstens ein gemeinsames Kühlgebläse (53, 74) gekühlt sind.

10. Fahrzeug nach Anspruch 9, **dadurch gekennzeichnet**, daß an einer Antriebsriemenscheibe (66) des stufenlosen Drehzahländerungsgetriebes (31) des Typs mit Riemen wenigstens ein Kühlgebläse (53, 74) vorgesehen ist.

11. Fahrzeug nach Anspruch 9 oder Anspruch 10, **dadurch gekennzeichnet**, daß in dem Motorgehäuse (27) ein Kühlgebläse (53) an die Verbindungsöffnung (49) angrenzend angeordnet und an einer Drehwelle (50) des Motors (30) angebracht ist.

12. Fahrzeug nach einem der Ansprüche 5 bis 11, **dadurch gekennzeichnet**, daß ein Ende eines Kanals (44) an der dem Getriebegehäuse (28) entgegengesetzten Seite mit dem Innenraum des Motorgehäuses (27) in Verbindung steht, und ein weiteres Ende sich in einen Innenraum (19) des Fahrzeugkörpers (3) öffnet, wobei der Kanal dem Innenraum des Motorgehäuses (27) zwangsweise Kühlluft zuführt.

**13.** Fahrzeug nach Anspruch 12, **dadurch gekennzeichnet**, daß die Zufuhrleitung (47) für elektrische Energie des Motors (30) innerhalb des Kanals (44) angeordnet ist.

**14.** Fahrzeug nach einem der Ansprüche 7 bis 13, **dadurch gekennzeichnet**, daß die Zufuhrleitung (47) für elektrische Energie des Motors (30), ohne durch das Getriebegehäuse (28) zu verlaufen, direkt aus dem Motorgehäuse (27) zu dessen Außenseite gezogen ist.

**Revendications**

**1.** Véhicule se déplaçant en transmettant, à une roue motrice (13), la rotation d'un moteur (30) entraîné par une batterie électrique (20), par l'intermédiaire d'une transmission (31) à variation de vitesse en continu et d'un embrayage de démarrage automatique (78, 85 ; 133), caractérisé par le fait que
ladite transmission (31) à variation de vitesse en continu est actionnée dans une plage de révolutions dudit moteur qui excède un nombre de tours correspondant à la puissance maximale dudit moteur (30), afin de maintenir la vitesse du moteur (30) à l'intérieur d'une plage présélectionnée pour se situer dans les limites d'un pourcentage prédéterminé de rendement maximal ($\eta_{max}$) du moteur.

**2.** Véhicule selon la revendication 1, caractérisé par le fait que ledit embrayage de démarrage automatique (78, 85 ; 133) est un embrayage (78, 85 ; 133) à force centrifuge.

**3.** Véhicule selon l'une quelconque des revendications 1 ou 2, caractérisé par le fait que ladite transmission (31) à variation de vitesse fait varier la vitesse à l'intérieur d'une plage de rapports de transmission délimitée par une limite inférieure prédéterminée et par une limite supérieure prédéterminée.

**4.** Véhicule selon la revendication 2, caractérisé par le fait que le coefficient d'utilisation du moteur (30) est réglé à moins de 100 % pour entraîner le véhicule dans des conditions normales de résistance au déplacement ; et par le fait qu'un dispositif de commande (21) est prévu pour augmenter le coefficient d'utilisation afin de compenser un accroissement ($\alpha$) de la résistance au déplacement du véhicule.

**5.** Véhicule selon l'une quelconque des revendications 1 à 4, caractérisé par le fait que ladite roue motrice (13) est supportée à rotation (en 14) par un carter (28) de transmission fixé de manière pivotante au châssis (3) du véhicule, pour pouvoir effectuer des oscillations, une transmission (31) à variation de vitesse en continu du type à courroie, prévue à l'intérieur dudit carter (28) de transmission, reliant la roue motrice (13) audit moteur (30), ledit moteur (30) étant logé à l'intérieur d'un carter (27) de moteur, prévu dans une région latérale du carter (28) de la transmission.

**6.** Véhicule selon la revendication 5, caractérisé par le fait que le carter (28) de la transmission est intégralement logé à l'intérieur d'un évidement (135), ménagé dans une surface latérale de la roue motrice (13) (figure 18)

**7.** Véhicule selon la revendication 5 ou la revendication 6, caractérisé par le fait que ledit carter (27) du moteur et ledit carter (28) de la transmission sont d'une structure monobloc.

**8.** Véhicule selon l'une quelconque des revendications 5 à 7, caractérisé par le fait qu'un câble (47) d'alimentation électrique du moteur (30) est fixé à un côté d'une pièce (35) conçue pour recouvrir une zone ouverte et pour être fixée, par le côté, au carter (27) dudit moteur.

**9.** Véhicule selon l'une quelconque des revendications 5 à 8, caractérisé par le fait qu'un orifice de communication (49) est prévu dans une zone de délimitation du carter (27) du moteur et du carter (28) de la transmission, et le moteur (30) et la transmission (31) à variation de vitesse en continu, du type à courroie, sont refroidis par au moins un ventilateur commun de refroidissement (53, 74).

**10.** Véhicule selon la revendication 9, caractérisé par le fait qu'au moins un ventilateur de refroidissement (53, 74) est prévu sur une poulie d'entraînement (66) de la transmission (31) à variation de vitesse en continu, du type à courroie.

**11.** Véhicule selon la revendication 9 ou la revendication 10, caractérisé par le fait qu'un ventilateur de refroidissement (53) occupe une position adjacente à l'orifice de communication (49), à l'intérieur du carter (27) du moteur, et est monté sur un arbre rotatif (50) du moteur (30).

**12.** Véhicule selon l'une quelconque des revendications 5 à 11, caractérisé par le fait qu'un conduit (44) est en communication par l'une de ses extrémités avec l'intérieur du carter (27) du moteur sur le côté opposé au carter (28) de la transmission et débouche par une autre extrémité dans un compartiment interne (19) du châssis (3) du véhicule qui charrie, à force, de l'air de refroidissement vers l'intérieur du carter (27) du moteur.

13. Véhicule selon la revendication 12, caractérisé par le fait que ledit câble (47) d'alimentation électrique du moteur (30) est agencé à l'intérieur du conduit (44).

14. Véhicule selon l'une quelconque des revendications 7 à 13, caractérisé par le fait que le câble (47) d'alimentation électrique du moteur (30) est directement extrait du carter (27) du moteur vers l'extérieur de ce dernier sans traverser le carter (28) de la transmission.

FIG.1

FIG.2

# FIG.3

# FIG.4

## FIG.5

## FIG.6

# FIG.7

FIG.8

FIG.9

FIG.10

FIG.11

EP 0 408 074 B1

F I G.12

## FIG.13

# FIG.14

# FIG.15

EP 0 408 074 B1

# FIG.16

EP 0 408 074 B1

FIG.17

# FIG.18

FIG.19

FIG.20

# FIG.21

107

SW₁ 107₁

L₁

SW₂

L₂ 107₂

SW_N 107_N

L_N

21

30

# FIG.22

FULL 1/2 136 RES

L₁ L₂ L₃ L₄ L₅

F I G.23

FIG.24